(19) Europäisches Patentamt

European Patent Office

Office européen des brevets

(11) EP 1 635 411 A1

(12) EUROPEAN PATENT APPLICATION
published in accordance with Art. 158(3) EPC

(43) Date of publication:
15.03.2006 Bulletin 2006/11

(51) Int Cl.:
H01M 8/02 (1974.07)    H01M 8/04 (1974.07)
H01M 8/06 (1974.07)    H01M 8/12 (1974.07)

(21) Application number: 04720699.0

(22) Date of filing: 15.03.2004

(86) International application number:
PCT/JP2004/003392

(87) International publication number:
WO 2004/084332 (30.09.2004 Gazette 2004/40)

(84) Designated Contracting States:
DE FR GB

(30) Priority: 17.03.2003  JP 2003072702

(71) Applicant: MATSUSHITA ELECTRIC INDUSTRIAL
CO., LTD.
Kadoma-shi, Osaka 571-8501 (JP)

(72) Inventor: TANIGUCHI, Noboru
Osaka 558-0047 (JP)

(74) Representative: Schorr, Frank Jürgen et al
Diehl & Partner GbR
Augustenstrasse 46
80333 München (DE)

(54) FUEL BATTERY

(57) There is provided a fuel cell having excellent portability and transportability and exhibiting superior power generation efficiency for which it is possible to use a liquid or solid fuel, which has higher energy density than a gaseous fuel. A fuel cell includes an electrolyte (1), an anode (2) and a cathode (3) that are disposed so as to sandwich the electrolyte (1), and further includes a fuel supply portion that supplies a fuel to the anode (2), an oxidant supply portion that supplies an oxidant containing oxygen to the cathode (3), and a cell heating portion that heats the fuel cell, and the electrolyte (1) is made of a solid oxide, and the fuel is a liquid or solid at room temperature and normal pressure.

FIG. 1

**Description**

Technical Field

The present invention relates to fuel cells.

Background Art

Recently, various types of fuel cells, including those with large capacities and those with small capacities, are being developed for specific applications as clean power generating apparatuses that can contribute to energy saving. In particular, utilizing their abilities to have high capacities, fuel cells are expected to be commercialized as power sources for mobile devices such as mobile phones and notebook computers to replace lithium ion batteries. The power sources for mobile devices are required to have excellent portability and transportability.

In general, fuel cells are divided into several types depending on the types of the electrolyte used. In the case of a fuel cell (PEFC) that uses a proton conductive polymer membrane (e.g., perfluoroethylene sulfonic acid, a typical example of which includes Nafion (R) by DuPont) as the electrolyte, the operating temperature is in the range from the vicinity of room temperature to about 100°C. On the other hand, in the case of a fuel cell (SOFC) that uses an oxide ion conductive solid electrolyte (e.g., zirconia-, ceria- or lanthanum gallate-based ceramics) as the electrolyte, the operating temperature is a high temperature of 600°C or above. These operating temperatures are determined by the characteristics of the electrolytes used for the fuel cells.

At present, extensive research is being carried out on PEFCs as portable and transportable fuel cells. PEFCs have an operating temperature closer to room temperature, and thus can save the use of heating devices. Furthermore, besides gaseous fuels such as hydrogen and natural gas, liquid fuels such as methanol can be used for fuel cells (fuel cells using methanol as the fuel may be referred to as DMFC, specifically). Liquid fuels have higher energy densities than gaseous fuels. Therefore, if liquid fuels can be used, then it is possible to provide a fuel cell having improved portability and transportability.

On the other hand, SOFCs have a high operating temperature of 600°C or above and thus require a heating device and a heat insulation structure, so that they are being developed mainly as stationary fuel cells, rather than as portable and transportable fuel cells. Therefore, gaseous fuels, such as hydrogen and natural gas, that continuously can be supplied mainly are contemplated as the fuel used for SOFCs, and the structure and configuration of these fuel cells also are designed with the use of gaseous fuels in mind.

In order to provide a fuel cell having excellent portability and transportability, it is necessary to realize a fuel cell including as few pieces of auxiliary equipment as possible, in addition to being efficient and exhibiting high energy density. However, PEFCs, which use a polymer membrane as the electrolyte, require water management for the polymer membrane due to their characteristics. For this purpose, it is necessary to provide, for example, a humidification device for humidifying air serving as an oxidant. When liquid fuels are used, there is the possibility of permeation (cross-over) of the fuel through the polymer membrane, resulting in decreased fuel utilization efficiency Furthermore, since these fuel cells have a low operating temperature, they exhibit lower power generation efficiency and have a narrower selection of fuels and catalysts, as compared with other types of fuel cells. In addition, when a gaseous fuel other than pure hydrogen is used, a reformer is required, so that separate energy is required for reforming the fuel.

Disclosure of Invention

It is an object of the present invention to provide a fuel cell having excellent portability and transportability for which it is possible to use a liquid or solid fuel, which has higher energy density than a gaseous fuel.

A fuel cell according to the present invention includes an electrolyte; an anode and a cathode that are disposed so as to sandwich the electrolyte; a fuel supply portion that supplies a fuel to the anode; an oxidant supply portion that supplies an oxidant containing oxygen to the cathode; and a cell heating portion that heats the fuel cell, wherein the electrolyte is made of a solid oxide, and wherein the fuel is a liquid or solid at room temperature and normal pressure.

Brief Description of Drawings

FIG. 1 is a schematic diagram showing an example of the fuel cell according to the present invention.
FIG. 2 is a schematic diagram showing another example of the fuel cell according to the present invention.
FIG. 3 is a schematic diagram showing an example of the cell heating portion included in the fuel cell according to the present invention.

FIG. 4 is a schematic diagram showing another example of the cell heating portion included in the fuel cell according to the present invention.

FIG. 5 is a schematic diagram showing yet another example of the fuel cell according to the present invention.

FIG. 6 is a schematic diagram showing a still another example of the fuel cell according to the present invention.

FIG. 7 is a graph showing an example of the power generation characteristics of the fuel cell according to the present invention, measured in an embodiment.

FIG. 8 is a schematic diagram showing a further example of the fuel cell according to the present invention.

FIG. 9 is a graph showing an example of the power generation characteristics of the fuel cell according to the present invention, measured in an embodiment.

FIG. 10 is a graph showing an example of the power generation characteristics of the fuel cell according to the present invention, measured in an embodiment.

FIG. 11 is a schematic diagram showing a further example of the fuel cell according to the present invention.

FIG. 12 is a graph showing an example of the power generation characteristics of the fuel cell according to the present invention, measured in an embodiment.

FIG. 13 is a schematic diagram showing a further example of the fuel cell according to the present invention.

Description of the Invention

Hereinafter, embodiments of the present invention will be described with reference to the accompanying drawings. It should be noted that in the following description of the embodiments, the same reference numerals may be applied to the same members, and their overlapping descriptions may be omitted.

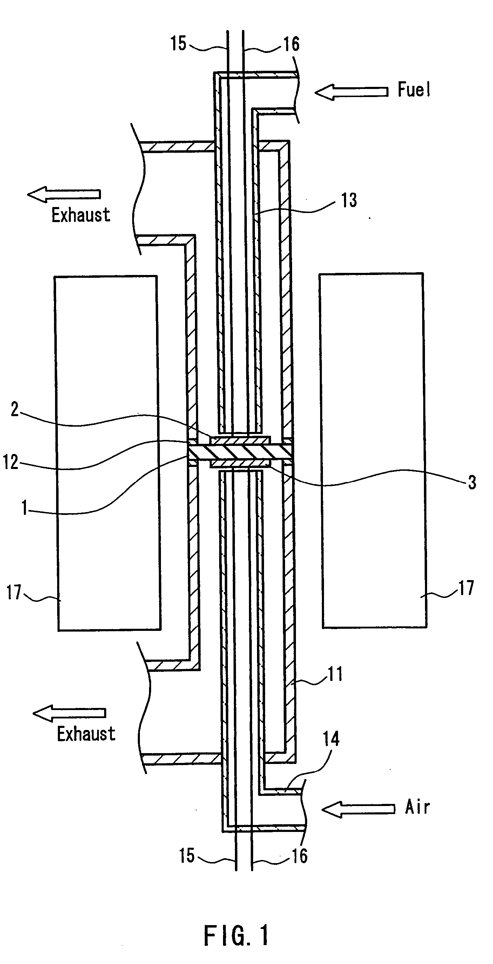

FIG. 1 shows an example of the fuel cell according to the present invention. The fuel cell shown in FIG. 1 is provided with an electrolyte 1, as well as an anode 2 and a cathode 3 that are disposed so as to sandwich the electrolyte 1. Furthermore, it is provided with a quartz tube 13 constituting a part of a fuel supply portion that supplies a fuel to the anode 2, and a quartz tube 14 constituting a part of an oxidant supply portion that supplies an oxidant containing oxygen to the cathode 3. As shown in FIG. 1, the fuel is supplied to the anode 2 through the quartz tube 13, and air, which is the oxidant, is supplied to the cathode 3 through the quartz tube 14. Further, the fuel cell shown in FIG. 1 includes a heater 17 as a cell heating portion that heats the fuel cell. The electrolyte 1 is made of a solid oxide, and the fuel is a liquid or solid at room temperature and normal pressure. It should be noted that in the present specification, "room temperature" refers to ambient temperature at which fuel cells usually are considered to be used, including for example a temperature in the range from about -40°C to about 50°C, and "normal pressure" refers to, for example, a pressure in the rage from about 70 kPa to about 120 kPa.

In FIG. 1, the anode 2, the cathode 3, and the quartz tubes 13 and 14 are housed inside alumina tubes 11. The alumina tubes 11 also serve as the exhaust tube for discharging, for example, unreacted fuel or oxidant, and water produced by reaction. The alumina tubes 11 are disposed on either the anode 2 side and the cathode 3 side, and are joined with glass packing 12 with the electrolyte 1 disposed therebetween. The glass packing 12 also serves to seal the anode 2 and the cathode 3 from the outside.

By forming a fuel cell in the above described manner, it is possible to provide a fuel cell having excellent portability and transportability and exhibiting superior power generation efficiency for which it is possible to use a liquid or solid fuel, which has higher energy efficiency than a gaseous fuel.

It should be noted that hatching has been omitted in some portions of FIG. 1 for the sake of clear explanation. The same also applies to the rest of the drawings.

In the fuel cell of the present invention, there is no particular limitation with respect to the electrolyte 1, as long as it is a solid oxide having oxide ion conductivity or proton conductivity. Particularly, a solid oxide having proton conductivity is preferable. In this case, the operating temperature can be lower than in the case of using a solid oxide having oxide ion conductivity, so that it is possible to provide a fuel cell having more excellent portability and transportability. It should be noted that "operating temperature" in this specification refers to a temperature at which a fuel cell can generate power continuously. "Temperature" in "operating temperature" refers to the temperature of the electrolyte, for example.

There is no particular limitation with respect to the shape of the electrolyte 1. For example, it may be planar or cylindrical. When the shape of the electrolyte 1 is planar, the thickness in a direction perpendicular to the principal surface may be in the range from 10 $\mu$m to 500 $\mu$m, for example. When the thickness is too small, there is the possibility of a cross leak of the fuel or the oxidant from the anode to the cathode (from the cathode to the anode). When the thickness is too large, on the other hand, there is the possibility of decreased ionic conductivity, which reduces the performance as the cell.

In the fuel cell of the present invention, the electrolyte 1 may contain barium (Ba) and at least one selected from cerium (Ce) and zirconium (Zr). Such an electrolyte has excellent proton conductivity, so that it is possible to provide a fuel cell exhibiting even higher power generation efficiency.

In the fuel cell of the present invention, the electrolyte may have a composition ratio represented by the formula:

$Ba(Zr_{1-x}Ce_x)_{1-y}M_yAl_zO_{3-\alpha}$ wherein M is at least one selected from In and trivalent rare-earth elements excluding Ce. That is, M is at least one selected from Gd, Y, Yb, Sm and In. Further, x, y, z and $\alpha$ are numerical values that satisfy, respectively, the relationships: $0 \leq x \leq 1$, $0 < y < 0.4$, $0 \leq z < 0.04$, and $0 < \alpha < 1.5$. Such an electrolyte has excellent proton conductivity, so that it is possible to provide a fuel cell exhibiting even higher power generation efficiency. It should be noted that $\alpha$ is a numerical value representing the degree of oxygen loss in the electrolyte, and this also applies to the electrolytes described below.

In particular, it is preferable that the above-described M is at least one selected from In, Gd, Y and Yb. More specifically, the electrolyte may have a composition ratio represented by at least one selected from the formulae: $BaCe_{0.8}Gd_{0.2}Al_{0.02}O_{3-\alpha}$, $BaZr_{0.6}Ce_{0.2}Gd_{0.2}O_{3-\alpha}$ and $BaZr_{0.4}Ce_{0.4}In_{0.2}O_{3-\alpha}$, for example. Such an electrolyte has excellent proton conductivity, so that it is possible to provide a fuel cell exhibiting even higher power generation efficiency.

Besides the above, it is possible to use, for example, $La_{0.8}Sr_{0.2}Ga_{0.8}Mg_{0.15}Co_{0.05}O_{3-\alpha}$, $La_{0.8}Sr_{0.2}Ga_{0.8}Mg_{0.15}Fe_{0.05}O_{3-\alpha}$ or $La_{0.8}Sr_{0.2}Ga_{0.8}Mg_{0.2}O_{3-\alpha}$ as the electrolyte 1.

In the fuel cell of the present invention, there is no particular limitation with respect to, for example, the shape or composition of the anode 2, as long as the supplied fuel can be oxidized. For example, it is sufficient that the anode includes a catalyst (anode catalyst) containing at least one selected from Pt, Ni, Ru, Ir and Pd. In particular, when a catalyst containing Pt is used, a highly efficient fuel cell can be provided.

In the fuel cell of the present invention, there is no particular limitation with respect to, for example, the shape or composition of the cathode 3, as long as oxygen can be reduced. For example, it is sufficient that the cathode includes a catalyst (cathode catalyst) containing Pt, for example, as a composition.

Here, an exemplary method for forming the anode 2 and the cathode 3 will be described. The anode 2 and the cathode 3 may be formed, for example, by applying a paint containing the above-described anode catalyst onto one principal surface of the electrolyte 1 and applying a paint containing the above-described cathode catalyst onto the other principal surface. After application, each of the catalysts is dried or baked, thereby obtaining a laminate in which the anode 2 and the cathode 3 are formed on either principal surface of the electrolyte. With this method, the shapes of the anode 2 and the cathode 3 can be determined by the shape of the electrolyte.

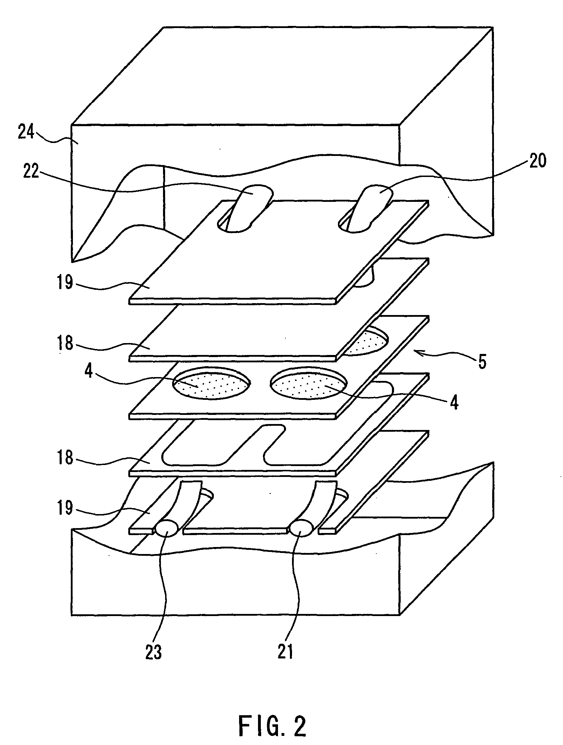

The thus formed laminate further is sandwiched by a pair of separators serving both as a fuel or oxidant channel and a current collector, thus forming a fuel cell in which the separator, the anode, the electrolyte, the cathode and the separator are laminated in this order (this state generally is called "single cell"). At this time, when the electrolyte and the separators are planar, a planar fuel cell can be obtained. Furthermore, a plurality of the above-described single cells may be stacked to form a stack. Since the single cells are connected electrically to each other in series, the overall output voltage of the fuel cell can be increased by increasing the number of the single cells to be stacked. Additionally, a flat plate made of, for example, metal, such as stainless steel, or carbon may be used as the separators. Further, the electrolyte onto which the anode and the cathode are formed may be sandwiched by a pair of the separators in such a manner that the anode or the cathode is in contact with a surface on which the fuel or oxidant channel is formed of the separators. FIG. 2 shows an example of a planar fuel cell including such separators.

In the fuel cell shown in FIG. 2, a laminate 4 that is constituted by an anode, an electrolyte and a cathode is held on a substrate 5 made of ceramic. Four pieces of the laminates 4 are held on the substrate 5, and portions of the anode and the cathode of each of the laminates 4 are exposed to the outside from openings that are formed in the substrate 5. The fuel and the oxidant are supplied to these exposed portions. In addition, the substrate 5 and the laminates 4 are sandwiched by a pair of separators 18 serving both as a fuel or oxidant channel and a current collector. A fuel supply tube 20 and an anode exhaust tube 22, or an oxidant supply tube 21 and a cathode exhaust tube 23, are connected to the separators 18. The separators 18 further are sandwiched by thin-film heaters 19, and the entire cell can be heated with the heaters 19. Furthermore, the entire fuel cell is covered with a heat insulating material 24.

Alternatively, the fuel cell also can be constructed by disposing a laminate formed as above in a housing in which an anode chamber and a cathode chamber are formed, such that the anode faces the anode chamber and the cathode faces the cathode chamber (that is, the anode chamber and the cathode chamber are separated from each other by the laminate). In this case, the fuel may be supplied to the anode chamber, and the oxidant may be supplied to the cathode chamber. In addition, there is no particular limitation with respect to, for example, the material for forming the anode chamber and the cathode chamber, and the capacity or shape of the anode chamber and the cathode chamber. Further, the fuel cell can be constructed by disposing a laminate formed as above inside a housing in such a manner that the interior of the housing is divided into at least two regions. In this case, the fuel may be supplied to the region that the anode of the laminate faces, and the oxidant may be supplied to the region that the cathode of the laminate faces. In addition, there is no particular limitation with respect to, for example, the material of the housing, and the capacity or shape of each of the regions.

In the fuel cell of the present invention, there is no particular limitation with respect to, for example, the configuration or mechanism of the fuel supply portion, as long as the fuel can be supplied to the anode. For example, the fuel supply portion may be configured using a tank or cartridge that stores the fuel, or a pump or the fuel supply tube that delivers the fuel to the anode. In addition, since the fuel cell according to the present invention uses a fuel that is a liquid or solid at room temperature and normal pressure, the size and the weight of the tank, the pump and the like can be made smaller than in the case of fuel cells using, for example, a high pressure gas or liquid hydrogen. Accordingly, it is possible to provide a fuel cell having excellent portability and transportability.

There is no particular limitation with respect to, for example, the configuration or mechanism of the oxidant supply portion, as long as the oxidant can be supplied to the cathode. For example, the oxidant supply portion may be configured using a tank or cartridge that stores the oxidant, or a pump, a compressor or the oxidant supply tube that delivers the oxidant to the cathode. There is no particular limitation with respect to the oxidant, as long as it contains oxygen, and air may be used, for example. When air is used as the oxidant, the tank or the like that stores the oxidant can be omitted. Further, when the oxidant can be used at the atmospheric pressure, the pump, compressor or the like also can be omitted.

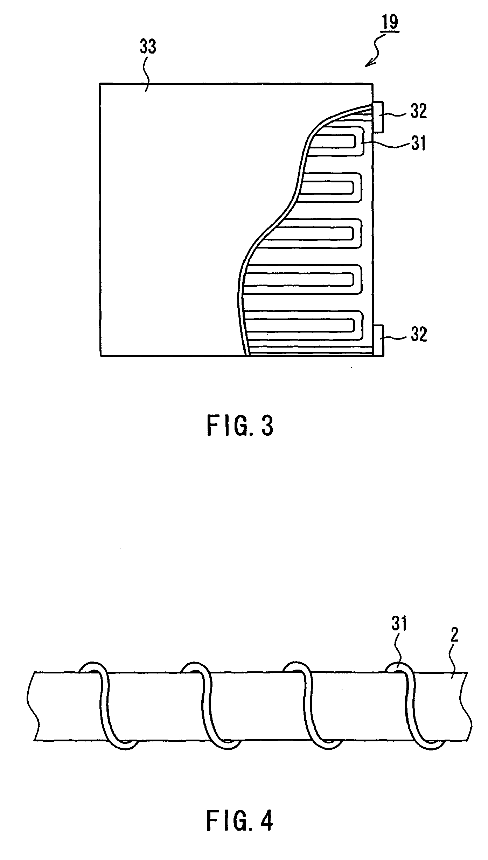

There is no particular limitation with respect to, for example, the configuration or mechanism of the cell heating portion, as long as the cell can be heated. For example, the cell heating portion may be configured using a heater. In particular, the use of a thin-film heater 19 as shown in FIG. 2 allows the heater to have a smaller capacity and to be arranged more freely, thus providing a fuel cell having even more excellent portability and transportability. The shape of the heater readily can be changed to match the shape of the portion where the heater is disposed. There is no particular limitation with respect to the shape of the thin-film heater 19. For example, as shown in FIG. 3, it is possible to use a heater 19 in which a heating element 31 that generates heat when it is supplied with electric current is disposed in a thin-film structure 33 having heat conductivity. The electric current may be applied to the heating element 31 via terminals 32, for example. Any material capable of being formed as a thin film and having some degree of heat conductivity may be used as the material for the structure 33, without any particular limitation. For example, it is possible to use mica or ceramic (e.g., silica or alumina). There is no particular limitation with respect to the material used for the heating element 31, and it is possible to use stainless steel, nichrome or platinum, for example. It should be noted that FIG. 3 shows an example of the simplest configuration for the thin-film heater 19. When required, a plurality of heating elements 31 having different properties may be included. Furthermore, it is possible to use a heater 19 in which the surface in contact with a member that is desired to be heated is constituted by the structure 33 having heat conductivity and a heat insulating material is disposed on the opposite surface.

A thin-film heater 19 as shown in FIG. 3 can be used regardless of whether the fuel cell is planar or cylindrical. When the fuel cell is cylindrical, the cell heating portion may have a configuration in which the heating element 31 simply is wound around a cylindrical electrode plate. FIG. 4 shows an example of such a cell heating portion. In the example shown in FIG. 4, as the cell heating portion, the heating element 31 is wound around a cylindrical anode 2 (in which an electrolyte and a cathode are disposed). The cell can be heated by applying electric current to the heating element 31. Thus, in the fuel cell of the present invention, for example, the configuration or shape of the cell heating portion may be set freely.

The cell heating portion may heat any member of the cell, as necessary. For example, it may heat the separators, as described above, or may heat the electrodes such as the anode and the cathode. It also may heat the fuel supply portion or the oxidant supply portion. It may heat the fuel itself. When the fuel is a solid fuel, it is preferable to heat the fuel itself. An example in which the fuel itself is heated will be described later in the embodiments.

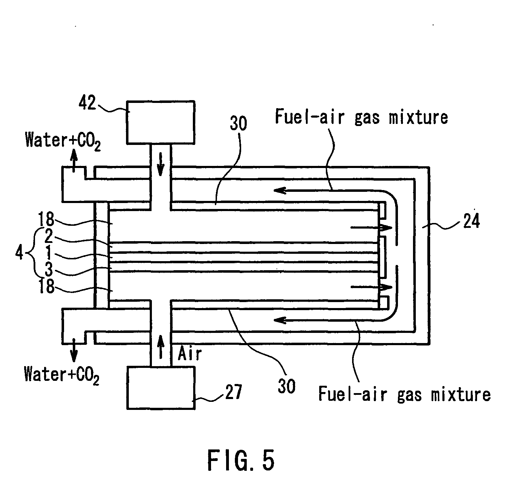

In the fuel cell of the present invention, the cell heating portion may include a catalyst for reacting the fuel with the oxidant. In this case, the cell can be heated by supplying portions of the fuel and the oxidant to the catalyst, so that it is possible to provide a fuel cell of higher efficiency than when the cell heating portion includes a heater (in the case of using a heater, power for the heater is required). FIG. 5 shows an example of such a fuel cell.

In the fuel cell shown in FIG. 5, catalytic layers 30 are disposed so as to be in contact with the separators 18. Each of the catalytic layers 30 is disposed on one of the separators 18 on the surface that is opposite from the surface facing the anode 2 or the cathode 3. Furthermore, the fuel cell has a configuration that permits a gas mixture (the fuel-air gas mixture in FIG. 5) of unreacted fuel that is exhausted without reacting in the anode 2 and unreacted oxidant that is exhausted without reacting in the cathode 3 to be supplied to the catalytic layers 30. Accordingly, in the fuel cell shown in FIG. 5, it is possible to mix unused fuel of the fuel supplied from a tank 42, which constitutes a part of the fuel supply portion, and unused air of the air supplied from a compressor 27, which constitutes a part of the oxidant supply portion, after they are discharged from the separators 18, and to react them using the catalytic layers 30. Heat resulting from the reaction can be used to increase or to maintain the cell temperature. Furthermore, the amount of heat generated in the catalytic layers 30 can be controlled by adjusting the flow rates of the fuel and the oxidant.

There is no particular limitation with respect to the catalyst for reacting the fuel with the oxidant, and it is possible to use Pt, Pd, Rh or Ru, for example. The catalyst may be applied onto the separators of the cell, for example, in the form of a paste. Alternatively, a chamber filled with the catalyst may be formed, and this chamber may be disposed so as to be in contact with the cell.

There is no particular limitation with respect to the method for supplying the fuel and the oxidant to the catalyst. For example, portions of the fuel and the oxidant may be separated to be supplied to the catalyst, before the fuel and the oxidant are supplied to the anode and the cathode. In this case, by disposing a valve at a branching point, it is possible to supply the fuel and the oxidant to the catalyst only when necessary.

Furthermore, as shown in FIG. 5, unused fuel and oxidant that are exhausted from the anode and the cathode may be supplied to the catalyst. In a fuel cell, all the fuel and the oxidant that are supplied to the anode and the cathode cannot always be consumed at the anode and the cathode (the ratio of the actually consumed amount to the supplied amount is referred to as a "utilization rate"). In general, immediately after startup, at which the cell temperature is low, the utilization rate is low, resulting in a large amount of unused fuel and oxidant. Furthermore, since the cell temperature is low, it is more necessary to heat the cell immediately after startup than at any other time. Therefore, by supplying unused fuel and oxidant to the catalyst, it is possible to provide a fuel cell of even higher efficiency.

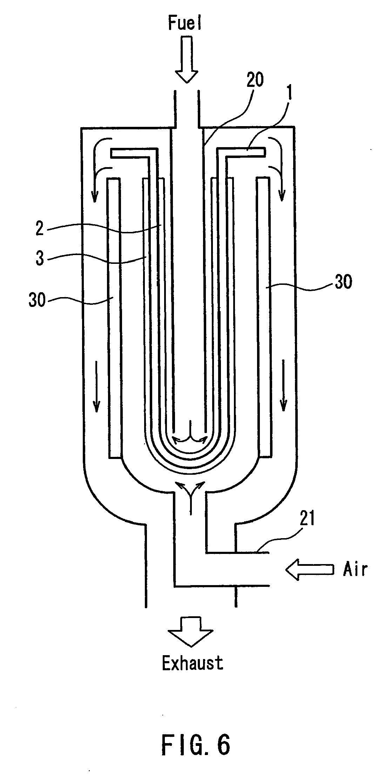

There is no particular limitation with respect to the position at which the catalytic layers 30 are disposed. In the example shown in FIG. 5, the catalytic layers 30 are disposed so as to be in contact with the separators 18. However, the catalytic layers 30 may be disposed at any given position, as long as heat generated in the catalytic layers 30 can be conducted to a member that is desired to be heated. When necessary, an optional material may be disposed between the catalytic layers 30 and a member that is desired to be heated. Furthermore, there also is no particular limitation with respect to the shape of the above-described catalyst, and the catalyst may be formed as layers as shown in FIG. 5, or as a block or a porous structure. Alternatively, the above-described catalyst may be attached and carried on the surface of a porous product such as a filter. It should be noted that although FIG. 5 shows an example of the planar fuel cell, it is possible to provide a fuel cell of even higher efficiency, by disposing the catalytic layers 30 in a cylindrical fuel cell in a similar manner. For example, the catalytic layers 30 may be disposed as shown in FIG. 6. FIG. 6 shows an example of a so-called cylindrical Tammann tube type fuel cell, in which the catalytic layers 30 are disposed on the surface of the inner wall of an exhaust tube serving as both the anode exhaust tube and the cathode exhaust tube.

The fuel cell according to the present invention further may include a collection portion (cathode collection portion) that collects, from exhaust of the cathode, at least one selected from the oxidant and water that are contained in the exhaust. By collecting water, it is possible to obtain water from the fuel cell, and also to reuse the collected water as the fuel. There is no particular limitation with respect to, for example, the mechanism or configuration of the cathode collection portion. For example, the oxidant and/or water in the form of liquid can be collected by using a gas-liquid separating device in a state in which the temperature of the cathode exhaust is 100°C or lower. A specific example of such a fuel cell will be described later in the embodiments.

Furthermore, the fuel cell according to the present invention may include a collection portion (anode collection portion) that collects, from exhaust of the anode, at least one selected from the fuel, carbon dioxide and water that are contained in the exhaust. By collecting the fuel, it is possible to reuse unused fuel, thus providing a fuel cell having even more excellent portability and transportability. By collecting water, it is possible to obtain water from the fuel cell, and also to reuse the collected water as the fuel. Moreover, by collecting carbon dioxide, it is possible to use the cell in a closed space. By collecting carbon dioxide separately from the fuel at this time, it is possible to prevent a gas that does not contribute to power generation from being mixed into the fuel that is to be reused. There is no particular limitation with respect to, for example, the mechanism or configuration of the anode collection portion. For example, it is possible to collect carbon dioxide, which is a gas, by using a gas-liquid separating device.

In other words, in the fuel cell according to the present invention, the fuel supply portion further may include a fuel circulation portion that resupplies unused fuel contained in exhaust of the anode to the anode. Furthermore, the fuel circulation portion may include a carbon dioxide collection portion that collects carbon dioxide contained in the anode exhaust. There is no particular limitation with respect to, for example, the mechanism or configuration of the carbon dioxide collection portion. For example, it is possible to use the above-described gas-liquid separating device, or a chamber filled with a basic solid such as sodium hydroxide. Further, there is no particular limitation with respect to, for example, the mechanism or configuration of the fuel circulation portion. A specific example of such a fuel cell will be described later in the embodiments.

In the fuel cell of the present invention, there is no particular limitation with respect to the fuel, as long as it is a liquid or solid at room temperature and normal pressure. As described above, "room temperature" means a temperature, for example, in the range from about -40°C to about 50°C, preferably in the range from -20°C to 40°C. "Normal pressure" means a pressure, for example, in the range from about 70 kPa to about 120 kPa. A temperature in the above-described ranges corresponds to ambient temperature at which human beings presumably can perform activities (that is, the fuel cell of the present invention generally is used). The fuel need not be a liquid or solid in all the above-described ranges. It may be a liquid or solid in some of the above-described ranges. It may be in a mixed state of a liquid and a solid. For example, butane has a boiling point of -0.5°C, and is a gas at 20°C and a pressure of 1 atmosphere. However, it turns into a liquid at -0.5°C or below, and easily is liquefied even at 20°C with only a slight pressure applied. Therefore, it can be included as the fuel used for the fuel cell of the present invention. Additionally, butane is commercially available in large quantities as a small and light portable cylinder gas.

More specifically, the fuel may be a mixture of an organic fuel and water, for example. There is no particular limitation with respect to the organic fuel, as long as it can be mixed with water. For example, the fuel may be at least one selected from methanol, ethanol, propanol, butanol and dimethyl ether. These lower alcohols can be mixed with water readily, and at any given ratio. In particular, it is preferable to use at least one selected from ethanol, propanol, butanol and dimethyl ether. These organic fuels do not have toxicity, unlike methanol, so that it is possible to provide a fuel cell offering a higher level of safety.

In the fuel cell of the present invention, the fuel may be at least one selected from methanol, ethanol, propanol, butanol, trioxane, dimethoxymethane, dimethyl ether, butane and trimethoxymethane. In particular, it is preferable to use at least one selected from ethanol, propanol, butanol, butane and dimethyl ether. These fuels do not have toxicity, unlike methanol, so it is possible to provide a fuel cell offering a higher level of safety.

In the fuel cell of the present invention, the fuel may be a solid at room temperature and normal pressure. For example, it may be a higher aliphatic alcohol having about 12 to about 26 carbon atoms. More specifically, the fuel may be at least one selected from dodecanol and 1-tetradecanol. It should be noted that dodecanol and 1-tetradecanol do not have toxicity, unlike methanol.

Furthermore, the fuel may be, for example, gasoline, kerosene, light oil or heavy oil. Each of these may be a fuel that is commercially available as gasoline, kerosene, light oil or heavy oil. Although commercially available gasoline contains various additives mixed therein, "gasoline" generally refers to a fuel having a lowest boiling fraction of about 30°C to about 220°C when refined from crude oil and containing hydrocarbons having about 4 to about 12 carbon atoms. For example, it corresponds to the fuels defined in JIS (Japanese Industrial Standard)-K-2201, JIS-K-2202 and JIS-K-2206. "Kerosene" generally refers to a fuel made of fractions having a boiling point in the range from about 145°C to about 300°C. For example, it corresponds to the fuel defined in JIS-K-2203. "Light oil" generally refers to a fuel made of fractions having a boiling point in the range from about 180°C to about 350°C. For example, it corresponds to the fuel defined in JIS-K-2204. "Heavy oil" is a fuel containing, as a component, residual oil that remains after refining, for example, gasoline, kerosene and light oil from crude oil, and corresponds to, for example, the fuel defined in JIS-K-2205.

Alternatively, the fuel may be an alcohol-containing gel. Specific examples include a solid fuel that is a gel formed by mixing alcohol with a saturated solution of calcium acetate.

In the above-described fuel cell of the present invention, the operating temperature may be, for example, in the range from 100°C to 500°C, more preferably in the range from 150°C to 350°C. These ranges are higher than the operating temperature range of PEFCs, so that it is possible to provide a fuel cell exhibiting higher power generation efficiency than that of PEFCs. Furthermore, these ranges are lower than the operating temperature of SOFCs, so that it is possible to provide a fuel cell that enables simplification of the heating device and the heat insulation device as compared with SOFCs and that has excellent portability and transportability, which have been difficult to achieve for SOFCs.

Embodiments

Hereinafter, the present invention will be described in further detail by way of embodiments. It should be noted that the present invention is not limited to the following embodiments.

Embodiment 1

In this embodiment, a fuel cell was produced actually, and power generation tests were carried out using, as the fuel, methanol, ethanol, propyl alcohol, butyl alcohol, methanol mixed with water (with a water content of 50 wt%), each of which was a liquid at room temperature and normal pressure, and butane. First, the method for producing the fuel cell used in this embodiment will be described.

First, an oxide having proton conductivity (in the shape of a 13 mm $\phi$ disk with a thickness of 220 $\mu$m) was produced as an electrolyte. More specifically, a columnar sintered product of the above-described oxide (13 mm $\phi$, 10 mm thick) was formed by a high temperature solid-phase process, and this was subjected to cutting and polishing, thereby producing an electrolyte with a thickness of 220 $\mu$m. In addition, the electrolyte (oxide) had the composition: $BaZr_{0.4}Ce_{0.4}In_{0.2}O_{3-\alpha}$ (wherein $0 < \alpha < 0.3$).

Next, a platinum paste (manufactured by Tanaka Kikinzoku Group, model number: TR7905) was applied as a catalyst onto both sides of the thus produced disk electrolyte, and baking was performed to form an anode and a cathode. Each of the anode and the cathode has a thickness of about 5 $\mu$m.

Then, the thus formed laminate of the anode, the electrolyte and the cathode was used to produce a fuel cell shown in FIG. 1. As described above, in the fuel cell shown in FIG. 1, the anode 2 and the cathode 3 are formed on either side of the electrolyte 1, and the electrolyte 1 is sandwiched by the alumina tubes 11 via the glass packing 12. The fuel is supplied to the anode 2 through the quartz tube 13, and air, which is the oxidant, is supplied to the cathode 3 through the quartz tube 14. The quartz tube 13 and the quartz tube 14 constitute a part of the fuel supply portion and that of the oxidant supply portion, respectively. Furthermore, an output lead wire 15 and a potential measuring lead wire 16 are bonded to each of the anode 2 and the cathode 3, so that it is possible to measure the voltage generated between the anode 2 and the cathode 3 (cell voltage), while outputting electric power generated by power generation to the outside. In the fuel cell shown in FIG. 1, as the cell heating portion, the heater 17 further is disposed so as to cover the alumina tubes 11. The alumina tubes 11 are one type of the above-described housing.

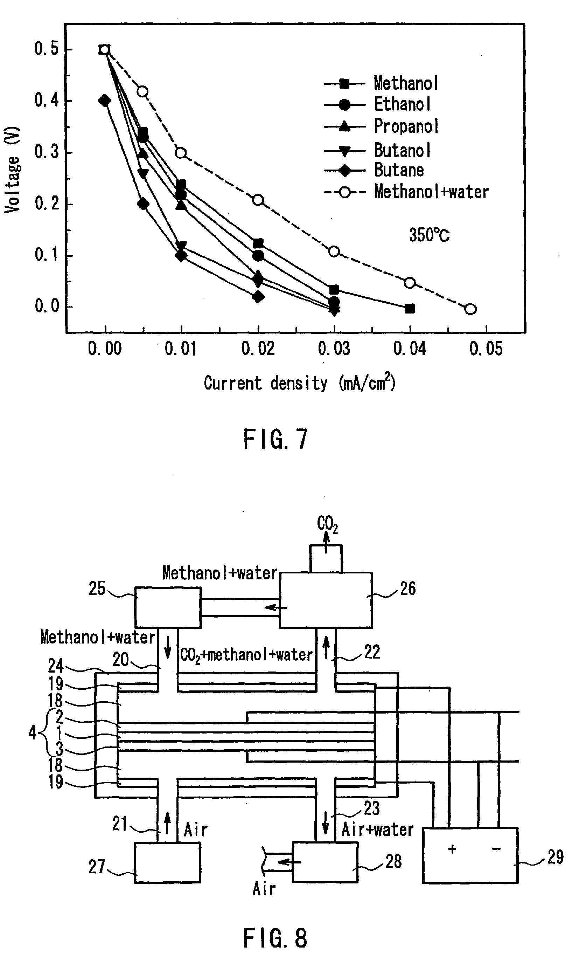

Power generation tests were conducted on the thus produced fuel cell. The test method will be described below. First, the interior of the alumina tubes 11 was heated to 350°C with the heater 17. At this time, the temperatures of the electrolyte 1, the anode 2 and the cathode 3 were set to 350°C (such a state is referred to a cell temperature being 350°C). Next, the fuel and the air were supplied through the quartz tube 13 and the quartz tube 14, and the relationship between the current density, which was the load, and the cell voltage (I-V characteristics) was measured. The results of the I-V characteristics are shown in FIG. 7.

As shown in FIG. 7, it was found that power generation was possible in each of the cases in which methanol, ethanol, propanol, butanol, methanol mixed with water, and butane were used as the fuel. Furthermore, results that were substantially the same as those shown in FIG. 7 also could be obtained when the cell temperature was 100°C, 150°C or 200°C.

Furthermore, substantially the same results also could be obtained when other oxides having proton conductivity, including, for example, $BaZr_{0.6}Ce_{0.2}Gd_{0.2}O_{3-\alpha}$, $BaZr_{0.4}Ce_{0.4}Y_{0.2}O_{3-\alpha}$, $BaZr_{0.4}Ce_{0.4}Yb_{0.2}O_{3-\alpha}$, $BaCe_{0.8}Gd_{0.2}O_{3-\alpha}$, $BaCe_{0.8}Gd_{0.2}Al_{0.02}O_{3-\alpha}$, $BaZr_{0.4}Ce_{0.4}In_{0.2}Al_{0.02}O_{3-\alpha}$, $BaZr_{0.6}Ce_{0.2}Gd_{0.2}Al_{0.02}O_{3-\alpha}$, $BaZr_{0.52}Ce_{0.24}Gd_{0.24}O_{3-\alpha}$, $BaZr_{0.56}Ce_{0.24}Gd_{0.2}O_{3-\alpha}$, $BaZr_{0.3}Ce_{0.5}In_{0.2}O_{3-\alpha}$ (however, in all of the above-described composition formulae, $0< \alpha <0.3$) were used as the oxide used for the electrolyte.

In addition, substantially the same results also could be obtained when a catalyst containing Ru or Rh was used as the catalyst used for the anode and the cathode, and when the thickness of the electrolyte was in the range from 10 $\mu$m to 500 $\mu$m.

Embodiment 2

In this embodiment, a fuel cell is produced actually, and power generation tests were carried out using methanol mixed with water (with a water content of 50 wt%) as the fuel. First, the method for producing the fuel cell used in this embodiment will be described.

First, an oxide having proton conductivity (in the shape of a 13 mm $\phi$ disk with a thickness of 220 $\mu$m) was produced as an electrolyte. More specifically, a columnar sintered product of the above-described oxide (13 mm $\phi$, 10 mm thick) was formed by a high temperature solid-phase process, and this was subjected to cutting and polishing, thereby producing an electrolyte with a thickness of 220 $\mu$m. In addition, the electrolyte (oxide) had the composition: $BaCe_{0.8}Gd_{0.2}Al_{0.02}O_{3-\alpha}$ (wherein $0 < \alpha < 0.3$).

Next, a platinum paste (manufactured by Tanaka Kikinzoku Group, model number: TR7905) was applied as a catalyst onto both sides of the thus produced disk electrolyte, and baking was performed to form an anode and a cathode. Each of the anode and the cathode has a thickness of about 2 $\mu$m.

Then, the thus formed laminate of the anode, the electrolyte and the cathode was used to produce a fuel cell shown in FIG. 2. As described above, in the fuel cell shown in FIG 2, the laminate 4 constituted by the anode, the electrolyte and the cathode is held on the substrate 5 made of ceramic. Four pieces of the laminates 4 are held on the substrate 5, and portions of the anode and the cathode of each of the laminates 4 are exposed to the outside from openings that are formed in the substrate 5. Since the fuel and the oxidant are supplied to these exposed portions, the electrode area of the fuel cell shown in FIG. 2 is equal to the total area of the exposed portions. In this embodiment, the total electrode area was 2 cm$^2$.

Further, in the fuel cell shown in FIG. 2, the substrate 5 and the laminates 4 are sandwiched by a pair of the separators 18 serving as both a fuel or oxidant channel and a current collector. The fuel supply tube 20 and the anode exhaust tube 22, or the oxidant supply tube 21 and the cathode exhaust tube 23, are connected to the separators 18. The separators 18 further are sandwiched by the thin-film heaters 19, and the entire cell can be heated with the heaters 19. Furthermore, the entire fuel cell shown in FIG. 2 is covered with the heat insulating material 24 made of a material containing silica. In addition, stainless steel was used as the material of the separators 18.

FIG. 8 shows a schematic diagram of the entire fuel cell shown in FIG. 2. As shown in FIG. 8, the fuel cell shown in FIG. 2 is provided with a secondary battery as an auxiliary power source 29, and can supply electric power from the auxiliary power source 29 to the heaters 19 at the startup of the cell. Accordingly, it is possible to heat the laminates 4, each constituted by the anode 2, the electrolyte 1 and the cathode 3, to a predetermined temperature using the electric power from the auxiliary power source 29, and then to supply the fuel and the air, which is the oxidant, to generate power. After the start of power generation, once the cell temperature can be maintained by heat generated during power generation, supply of electric power from the auxiliary power source 29 to the heater 19 may be suspended, and, conversely, the auxiliary power source 29 may be charged with the generated electric power.

Furthermore, the fuel cell shown in FIG. 2 is provided with the tank 26 and the pump 25 (with an output of 0.15 mW) as the fuel supply portion, as shown in FIG. 8. The tank 26 is connected also to the anode exhaust tube 22, and also serves as the anode collection portion and the fuel circulation portion. Moreover, the tank 26 includes a gas-liquid separating device, and thus can exhaust only carbon dioxide contained in the anode exhaust to the outside. In addition, a piezoelectric pump was used as the pump 25.

Similarly, the fuel cell shown in FIG. 2 is provided with the compressor 27 as the oxidant supply portion, and the tank 28 as the cathode collection portion. The tank 28 includes a gas-liquid separating device, and can exhaust only the air contained in the cathode exhaust to the outside.

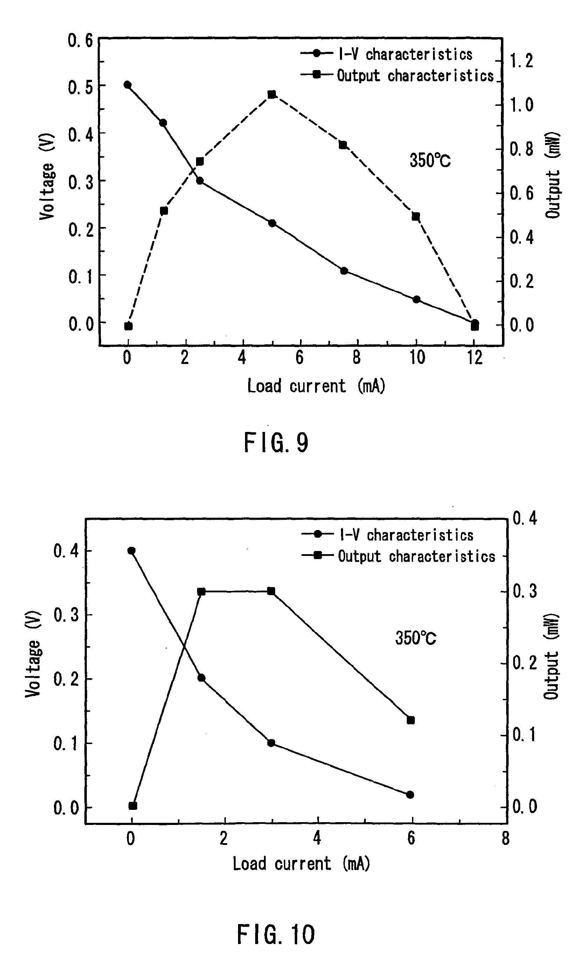

Power generation tests were carried out on the thus produced fuel cell using methanol mixed with water (with a water content of 50 wt%) as the fuel. At this time, the cell temperature was set to 350°C, and the relationship between the load current and the cell voltage (the I-V characteristics in FIG. 9) and the relationship between the load current and the output (the output characteristics in FIG. 9) were evaluated. The results are shown in FIG. 9. In FIG. 9, the horizontal axis denotes the load current (mA).

As shown in FIG. 9, in this embodiment, a maximum output of 1 mW could be obtained. At this time, after subtracting the power consumed by the auxiliary machinery such as the pump, the heater and the compressor, an output of about 0.15 mW still could be obtained. That is, it was found that the fuel cell of this embodiment was capable of independent power generation, covering the auxiliary machinery. Therefore, it can be said that the fuel cell of this embodiment is a fuel cell having excellent portability and transportability.

In addition, substantially the same results also could be obtained when the electrolytes described in Embodiment 1 were used as the electrolyte. Further, substantially the same results could be obtained when a catalyst containing Ru or Rh was used as the catalyst used for the anode and the cathode, and when the thickness of the electrolyte was in the range from 10 $\mu$m to 500 $\mu$m. Moreover, the output could be improved even further when a material with a lower electric resistance was used as the material of the separator.

Embodiment 3

In this embodiment, a fuel cell in which the configuration of the fuel cell shown in FIG. 2 was modified partially was produced, and power generation tests were performed.

First, an oxide having proton conductivity (in the shape of a 13 mm$\phi$ disk with a thickness of 220 $\mu$m) was produced as an electrolyte. More specifically, a columnar sintered product of the above-described oxide (13 mm $\phi$, 10 mm thick) was formed by a high temperature solid-phase process, and this was subjected to cutting and polishing, thereby producing an electrolyte with a thickness of 220 $\mu$m. In addition, the electrolyte (oxide) had the composition: $BaZr_{0.6}Ce_{0.2}Gd_{0.2}O_{3-\alpha}$ (wherein $0 < \alpha < 0.3$).

Next, a platinum paste (manufactured by Tanaka Kikinzoku Group, model number: TR7905) was applied as a catalyst onto both sides of the thus produced disk electrolyte, and baking was performed to produce an anode and a cathode. Each of the anode and the cathode has a thickness of about 3 $\mu$m.

Then, the thus formed laminate of the anode, the electrolyte and the cathode was used to produce a fuel cell shown in FIG. 2. However, in this embodiment, catalytic layers containing Pt were disposed as the catalyst for reacting the fuel with the oxidant, in place of the heaters 19. Furthermore, carbon was used as the material of the separators 18. FIG. 5 shows a schematic diagram of the entire fuel cell used in this embodiment (the rest of the configuration, the electrode area and others are the same as those in Embodiment 2).

As described above, in the fuel cell of this embodiment, the catalytic layers 30 are disposed so as to be in contact with the separators 18. In such a fuel cell, it is possible to mix unused fuel of the fuel supplied from the tank 42, which constitutes the fuel supply portion, and unused air of the air supplied from the compressor 27, which constitutes the oxidant supply portion, after they are discharged from the separators 18, and to react them using the catalytic layers 30. Heat resulting from the reaction can be used to increase or to maintain the cell temperature. Furthermore, the amount of heat generated in the catalytic layers 30 can be controlled by adjusting the flow rates of the fuel and the oxidant. In addition, the area of the catalytic layers 30 was set to be the same as that of the separators 18, and the thickness of the catalytic layer 30 was set to 5 $\mu$m.

Power generation tests were carried out on the thus produced fuel cell using butane as the fuel. First, butane and air were supplied to and burned in the catalytic layers 30 to set the cell temperature to about 350°C. Next, the flow rates of butane and the air were adjusted, and power generation tests were performed. The results are shown in FIG. 10.

As shown in FIG. 10, in this embodiment, a maximum output of 0.35 mW could be obtained. At this time, after subtracting the power consumed by the auxiliary machinery such as the pump, an output of about 0.2 mW still could be obtained. That is, it was found that the fuel cell of this embodiment was capable of independent power generation, covering the auxiliary machinery. Therefore, it can be said that the fuel cell of this emulsion is a fuel cell having excellent portability and transportability.

In addition, substantially the same results also could be obtained when the electrolytes described in Embodiment 1 were used as the electrolyte. Substantially the same results also could be obtained when the anode collection portion and/or the cathode collection portion was disposed. Further, substantially the same results also could be obtained when a catalyst containing Ru or Rh was used as the catalyst used for the anode and the cathode, and when the thickness of the electrolyte was in the range from 10 $\mu$m to 500 $\mu$m.

Embodiment 4

In this embodiment, a fuel cell in which the configuration of the fuel cell shown in FIG. 1 was modified partially was produced, and power generation tests were performed. Furthermore, fuels that are solids at room temperature and normal pressure (an alcohol-containing gel, dodecanol and 1-tetradecanol) were used as the fuel.

First, an oxide having proton conductivity (in the shape of a 13 mm $\phi$ disk with a thickness of 220 $\mu$m) was produced as an electrolyte. More specifically, a columnar sintered product of the above-described oxide (13 mm $\phi$, 10 mm thick) was formed by a high temperature solid-phase process, and this was subjected to cutting and polishing, thereby producing an electrolyte with a thickness of 220 $\mu$m. In addition, the electrolyte (oxide) had the composition: $BaZr_{0.4}Ce_{0.4}In_{0.2}Al_{0.01}O_{3-\alpha}$ (wherein $0 < \alpha < 0.3$).

Next, a platinum paste (manufactured by Tanaka Kikinzoku Group, model number: TR7905) was applied as a catalyst onto both sides of the thus produced disk electrolyte, and baking was performed to produce an anode and a cathode. Each of the anode and the cathode has a thickness of about 8 $\mu$m.

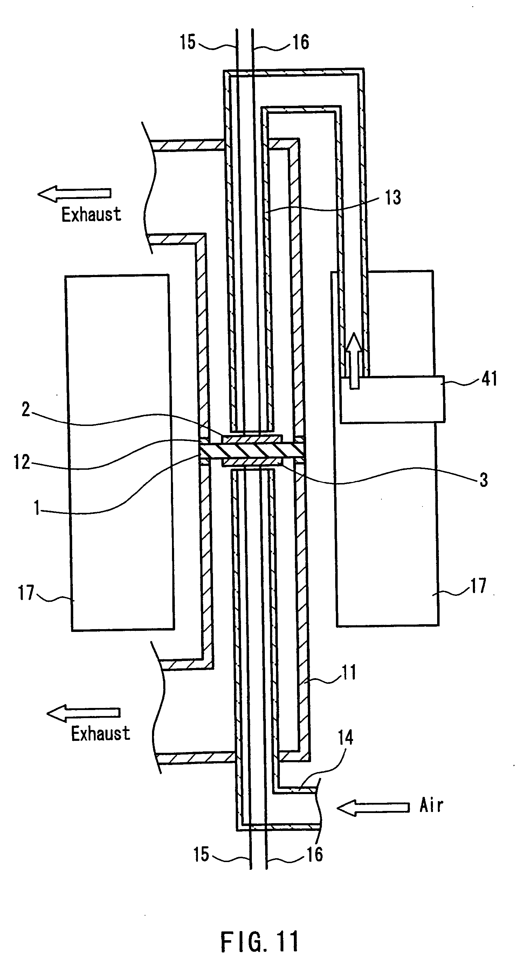

Then, the thus formed laminate of the anode, the electrolyte and the cathode was used to produce a fuel cell shown in FIG. 11. The fuel cell shown in FIG. 11 is identical to the fuel cell shown in FIG. 1, except that a tank 41 in which a solid fuel is sealed is embedded in the heater 17. Since the tank 41 is embedded in the heater 17, the fuel cell shown in FIG. 11 is a fuel cell capable of heating the fuel with the cell heating portion.

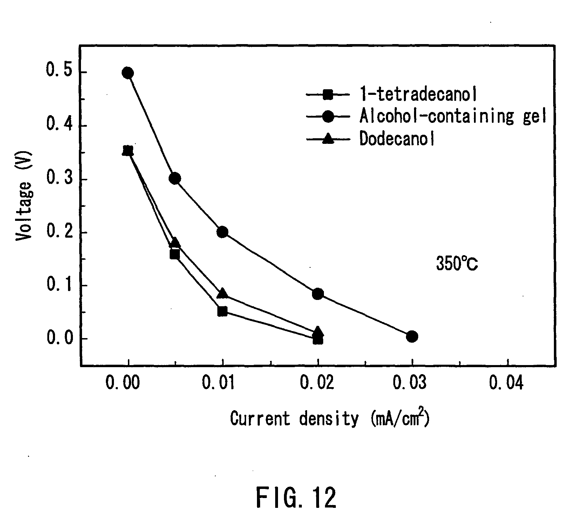

Power generation tests were performed on the thus produced fuel cell, with the cell temperature being set to 350°C. It should be noted that the alcohol-containing gel used as the fuel is a solid fuel that is a gel formed by mixing ethanol with a saturated solution of calcium acetate. The results of the power generation tests are shown in FIG. 12.

As shown in FIG. 12, it was found that sufficient power generation also was possible in the cases of using, as the fuel, dodecanol, 1-tetradecanol and the alcohol-containing gel, which were solids at room temperature and normal pressure.

In addition, substantially the same results also could be obtained when the electrolytes described in Embodiment 1 were used as the electrolyte. Further, substantially the same results could be obtained when a catalyst containing Ru or Rh was used as the catalyst used for the anode and the cathode, and when the thickness of the electrolyte was in the range from 10 $\mu$m to 500 $\mu$m.

Embodiment 5

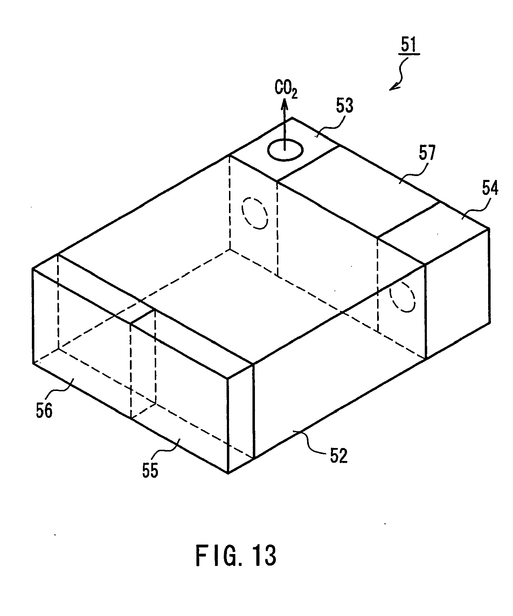

In this embodiment, an example will be described in which a prototype of a fuel cell that was intended for power sources used for personal computers (PCs), mobile phones and the like was produced actually. FIG. 13 shows a fuel cell 51 that was contemplated in this embodiment. The fuel cell 51 shown in FIG. 13 includes: a cell 52; a fuel tank 57; a pump 54 that supplies the fuel from the fuel tank 57 to the cell 52; an anode collection portion 53; a compressor 55 that supplies air to the cell 52; and a cathode collection portion 56. A laminate of the electrolyte 1, the anode 2, the cathode 3, the separators 18 and the catalytic layers 30, as shown in FIG. 5, was used as the cell 52. In addition, the size of the fuel cell 51 was 30 mm x 30 mm x 20 mm, and the electrode area of the cell 52 was 3 cm$^2$.

It was found that in the case of using the oxides described above in Embodiments 1 to 4 as the electrolyte, the catalysts described above in Embodiments 1 to 4 as the anode and the cathode, and the fuels described above in Embodiments 1 to 4 as the fuel for the thus produced fuel cell, it was possible to provide a fuel cell having higher energy conversion efficiency and an actual capacity that was about 1.2 time larger than a PEFC having an equivalent size, including the auxiliary machinery. The capacity was calculated from the obtained I-V curve (current-voltage characteristics curve).

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

Industrial Applicability

As described above, according to the present invention, it is possible to provide a fuel cell having excellent portability and transportability and exhibiting superior power generation efficiency for which it is possible to use a liquid or solid fuel, which has higher energy density than a gaseous fuel.

**Claims**

1.  A fuel cell comprising:

    an electrolyte;
    an anode and a cathode that are disposed so as to sandwich the electrolyte;
    a fuel supply portion that supplies a fuel to the anode;
    an oxidant supply portion that supplies an oxidant containing oxygen to the cathode; and
    a cell heating portion that heats the fuel cell,
    wherein the electrolyte is made of a solid oxide; and
    the fuel is a liquid or solid at room temperature and normal pressure.

2.  The fuel cell according to claim 1, further comprising:

    a collection portion that collects, from exhaust of the cathode, at least one selected from the oxidant and water that are contained in the exhaust.

3.  The fuel cell according to claim 1, further comprising:

    a collection portion that collects, from exhaust of the anode, at least one selected from the fuel, carbon dioxide and water that are contained in the exhaust.

4.  The fuel cell according to claim 1,
    wherein the fuel supply portion includes a fuel circulation portion that resupplies unused fuel contained in exhaust of the anode to the anode.

5.  The fuel cell according to claim 4,
    wherein the fuel circulation portion further includes a carbon dioxide collection portion that collects carbon dioxide contained in the exhaust.

6.  The fuel cell according to claim 1,
    wherein the cell heating portion includes a catalyst for reacting the fuel with the oxidant.

7.  The fuel cell according to claim 6,
    wherein the fuel and the oxidant contain, respectively, unused fuel and oxidant that are exhausted from the anode and the cathode.

8.  The fuel cell according to claim 1,
    wherein the electrolyte is made of an oxide having proton conductivity.

9.  The fuel cell according to claim 8,
    wherein the electrolyte contains barium (Ba) and at least one selected from cerium (Ce) and zirconium (Zr).

10. The fuel cell according to claim 9,
    wherein the electrolyte has a composition ratio represented by a formula: $Ba(Zr_{1-x}Ce_x)_{1-y}M_yAl_zO_{3-\alpha}$;
    wherein M is at least one selected from In and trivalent rare-earth elements excluding Ce; and
    wherein x, y, z and $\alpha$ are numerical values that satisfy, respectively, the following relationships:

$$0 \le x \le 1$$

$$0 < y < 0.4$$

$$0 \le z < 0.04$$

$$0 < \alpha < 1.5.$$

11. The fuel cell according to claim 10,
wherein the M is at least one selected from In, Gd, Y and Yb.

12. The fuel cell according to claim 11,
wherein the electrolyte has a composition represented by at least one selected from formulae: $BaCe_{0.8}Gd_{0.2}Al_{0.02}O_{3-\alpha}$, $BaZr_{0.6}Ce_{0.2}Gd_{0.2}O_{3-\alpha}$ and $BaZr_{0.4}Ce_{0.4}In_{0.2}O_{3-\alpha}$.

13. The fuel cell according to claim 1,
wherein the fuel is a mixture of an organic fuel and water.

14. The fuel cell according to claim 13,
wherein the organic fuel is at least one selected from methanol, ethanol, propanol, butanol and dimethyl ether.

15. The fuel cell according to claim 14,
wherein the organic fuel is at least one selected from ethanol, propanol, butanol and dimethyl ether.

16. The fuel cell according to claim 1,
wherein the fuel is at least one selected from methanol, ethanol, propanol, butanol, trioxane, dimethoxymethane, trimethoxymethane, dodecanol, dimethyl ether, butane and 1-tetradecanol.

17. The fuel cell according to claim 16,
wherein the fuel is at least one selected from ethanol, propanol, butanol, dodecanol, dimethyl ether, butane and 1-tetradecanol.

18. The fuel cell according to claim 1,
wherein the fuel is a higher aliphatic alcohol having at least 12 and at most 26 carbon atoms.

19. The fuel cell according to claim 1,
wherein the fuel is at least one selected from gasoline, kerosene, light oil and heavy oil.

20. The fuel cell according to claim 1,
wherein the fuel is an alcohol-containing gel.

21. The fuel cell according to claim 1,
wherein an operating temperature is in the range from 100°C to 500°C.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

## INTERNATIONAL SEARCH REPORT

International application No.

PCT/JP2004/003392

| A. CLASSIFICATION OF SUBJECT MATTER |
|---|
| Int.Cl$^7$ H01M8/02, H01M8/04, H01M8/06, H01M8/12 |

According to International Patent Classification (IPC) or to both national classification and IPC

| B. FIELDS SEARCHED |
|---|
| Minimum documentation searched (classification system followed by classification symbols) |
| Int.Cl$^7$ H01M8/02, H01M8/04, H01M8/06, H01M8/12 |

Documentation searched other than minimum documentation to the extent that such documents are included in the fields searched

| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)
JOIS

### C. DOCUMENTS CONSIDERED TO BE RELEVANT

| Category* | Citation of document, with indication, where appropriate, of the relevant passages | Relevant to claim No. |
|---|---|---|
| X | JP 2003-59495 A (BASF AG.), | 1,8-17,21 |
| Y | 28 February, 2003 (28.02.03),<br>Claim 6; Par. Nos. [0001], [0004], [0016],<br>[0027], [0041]<br>& US 2003-12996 A1      & EP 1271683 A2 | 2-7,14-21 |
| X | JP 2002-246047 A (Nissan Motor Co., Ltd.),<br>30 August, 2002 (30.08.02), | 1,8,13,18,<br>19 |
| Y | Claim 9; Par. Nos. [0005], [0025], [0037] to<br>[0042]<br>& US 2002-114988 A1      & EP 1235291 A2 | 2-7,9-12,<br>14-21 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 June, 2004 (11.06.04) | 29 June, 2004 (29.06.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

# EP 1 635 411 A1

<table>
<tr><th colspan="2" align="center">INTERNATIONAL SEARCH REPORT</th><th colspan="2">International application No.<br>PCT/JP2004/003392</th></tr>
<tr><td colspan="4">C (Continuation). DOCUMENTS CONSIDERED TO BE RELEVANT</td></tr>
<tr><td align="center">Category*</td><td colspan="2" align="center">Citation of document, with indication, where appropriate, of the relevant passages</td><td align="center">Relevant to claim No.</td></tr>
<tr><td align="center">Y</td><td colspan="2">JP 2001-307546 A (Matsushita Electric Industrial Co., Ltd.),<br>02 November, 2001 (02.11.01),<br>Full text<br>& US 2001-18989 A1     & EP 1125893 A1</td><td align="center">8-12</td></tr>
<tr><td align="center">Y</td><td colspan="2">Hiroshi IWAHARA, Takashi HIBINO, Tamotsu YAJIMA, "Perovskite-gata Sankabutsu o Bozai to shita Koshitsugata Proton Dendosei Ceramics ni Kansuru Kenkyu", Journal of the Chemical Society of Japan, 1993, No.9, pages 1003 to 1011</td><td align="center">8,9</td></tr>
<tr><td align="center">Y</td><td colspan="2">N. TANIGUCHI, K. HATOH, J. NIIKURA, T. GAMO, Solid State Ionics, 1992, Vol.998, pages 53 to 56</td><td align="center">8,9</td></tr>
<tr><td align="center">Y</td><td colspan="2">WO 01-54220 A2 (RAMOT UNIVERSITY UTHORITY FOR APPLIED RESEARCH AND INDUSTRIAL DEVELOPMENT),<br>26 July, 2001 (26.07.01),<br>Whole document<br>& JP 2003-520413 A</td><td align="center">1</td></tr>
<tr><td align="center">A</td><td colspan="2">JP 10-67558 A (Santoku Metal Industry Co., Ltd.),<br>10 March, 1998 (10.03.98),<br>(Family: none)</td><td align="center">1-21</td></tr>
</table>

Form PCT/ISA/210 (continuation of second sheet) (January 2004)